# EUROPÄISCHE PATENTSCHRIFT

(11) **EP 1 293 801 B1**
(45) Veröffentlichungstag und Bekanntmachung des Hinweises auf die Patenterteilung: **07.02.2007**
(21) Anmeldenummer: 02017336.5
(22) Anmeldetag: 02.08.2002
(51) Int. Cl.: G01S 15/10

(54) **Verfahren zur Entfernungsmessung**
Distance measuring method
Procédé de mesure de distance

(30) Priorität: 17.08.2001 DE 10140346
(43) Veröffentlichungstag der Anmeldung: 19.03.2003
(73) Patentinhaber: ROBERT BOSCH GMBH, 70442 Stuttgart (DE)
(72) Erfinder: Schlick, Michael, 71229 Leonberg (DE); Schmid, Dirk, 75397 Simmozheim (DE); Schick, Jens, 71083 Herrenberg (DE)

(56) Entgegenhaltungen:
- EP-A- 0 164 444
- WO-A-00/05597
- WO-A-97/14936
- DE-A- 4 208 595
- FR-A- 2 624 276
- GB-A- 1 289 679
- US-A- 5 833 614
- US-A- 5 847 816

## Beschreibung

### Stand der Technik

Die Erfindung geht aus von einem Verfahren zur Entfernungsmessung nach der Gattung des Hauptanspruchs. Es sind insbesondere schon Verfahren zur Entfernungsmessung mittels eines Ultraschallechoverfahrens bekannt, bei dem von einem Ultraschallgeber ein Ultraschallsignal erzeugt wird, dieses von einem Hindernis reflektiert und das reflektierte Signal von einem Empfänger wieder aufgenommen wird. Das empfangene Signal wird verstärkt, gleichgerichtet und einer Tiefpassfilterung zugeführt. Durch die Tiefpassfilterung wird das empfangene Signal geglättet. Das ausgesendete Signal stellt im allgemeinen ein Wellenpaket von mehreren Perioden der Ultraschallschwingung des Ultraschallgebers dar. Auch bei einem möglichst gebündelten Signal kommt es zu einem Auseinanderlaufen des Signals. Um eine Laufzeit möglichst genau zu bestimmen, wird der Zeitpunkt der Signalaussendung mit einem Maximum des empfangenen Wellenpakets verglichen. Hierzu wird das Maximum des Ausgangssignals des Tiefpasses bestimmt, das eine Hüllkurve für eine Amplitudenfunktion des empfangenen Signals darstellt. Für die Tiefpassfilterung werden jedoch analoge Bauteile benötigt. Die Rekonstruktion der Einhüllenden ist dabei nur unvollkommen möglich. Mit vertretbarem Aufwand realisierbare analoge Tiefpassfilter besitzen nur eine niedrige Ordnung und führen entweder zu einer schlechten Unterdrückung der Ultraschallfrequenz oder zu einer Verbreiterung der Einhüllenden, je nach eingestellter Grenzfrequenz des Tiefpasses. Durch beide Effekte wird die maximal mögliche Trennschärfe eines Ultraschallempfängers vermindert. Mehrere dicht gestaffelte Objekte können daher nicht mehr als getrennte Objekte erfasst werden, da die Hüllkurven jeweils ineinander laufen. Insbesondere bei auftretenden Störsignalen wird damit die Genauigkeit der Abstandsmessung vermindert.

Die EP 016444 A1 zeigt ein Verfahren zur Auswertung der Laufzeit von Ultraschallsignalen, insbesondere für die industrielle Automation, wobei ein breitbandiger Ultraschallwandler verwendet wird und eine Digitalisierung des Ultraschall-Echosignals auf den Wellenzug des Ultraschall-Empfangsignals angewendet wird. Aus der WO 97/14936 ist eine Ultraschall-Geschwindigkeitsmessung für Flüssigkeiten bekannt, bei der eine Schalllaufzeit mit der Strömung und gegen die Strömung gemessen und hieraus die Strömungsgeschwindigkeit bestimmt wird. Aus der WO 00/05597 ist eine Radareinrichtung bekannt, bei der die maximale Amplitude eines Signal-Bursts bestimmt wird. Aus der US 5,833,614 ist eine bildgebende Methode mittels Ultraschall bekannt. Aus der US 5,847,816 ist ein fiberoptisches Mikro-Dopplerradarsystem bekannt, bei dem ein optisches Signal ausgestrahlt und die Frequenzverschiebung des empfangenen gegenüber dem ausgestrahlten Signals bestimmt wird. Aus der GB 1289679 ist ein Dopplersonarsystem benannt. Aus der FR 2624276 ist ein Sonarsystem für Schiffe mit einem PLL-Filter zur Unterdrückung parasitärer Frequenzen bekannt.

### Vorteile der Erfindung

Das erfindungsgemäße Verfahren mit den Merkmalen des Hauptanspruchs hat demgegenüber den Vorteil, dass auf die Verwendung eines Tiefpasses verzichtet werden kann, indem das empfangene Signal mit seiner Frequenz oder einem Vielfachen, vorzugsweise einem ganzzahligen Vielfachen, seiner Frequenz, abgetastet wird. Die Frequenz des empfangenen Signals entspricht dabei ungefähr der Frequenz des abgestrahlten Signals. Durch den Verzicht auf einen analogen Tiefpass wird damit die maximal mögliche Trennschärfe erhöht, wobei auf analoge Bauteile verzichtet werden kann. Die Signalverarbeitung kann stattdessen in vorteilhafter Weise durch digitale Bauelemente erfolgen.

Besonders vorteilhaft ist, das empfangene Signal mittels einer PLL-Stufe (Phase-Locked-Loop) zu synchronisieren. Hierdurch kann die Abtastung des empfangenen Signals genau auf die Schallfrequenz des empfangenen Signals abgestimmt werden. Somit können geringe Frequenzverschiebungen ausgeglichen werden, wie sie z.B. durch den Dopplereffekt in Folge einer Bewegung des Hindernisses oder des Fahrzeugs verursacht werden können. Insbesondere ist hierdurch möglich, die Abtastung der Wellenform möglichst genau an den Stellen der Maxima vorzunehmen.

Durch die in den Unteransprüchen aufgeführten Maßnahmen sind vorteilhafte Weiterbildungen und Verbesserungen des im Hauptanspruch angegebenen Verfahrens zur Entfernungsmessung möglich. Es ist vorteilhaft, insbesondere die Maxima auszuwerten, da durch den Vergleich der Maxima des empfangenen Signals das absolute Maximum des empfangenen Signalpakets bestimmt werden kann. Das absolute Maximum ist mit einer durch die Frequenz des Signals gegebenen Genauigkeit bestimmbar. Aus dem Zeitpunkt des absoluten Maximums können die Laufzeit des Signals und damit die Entfernung bestimmt werden.

Weiterhin ist vorteilhaft, die Daten des empfangenen Signals zu digitalisieren und diese Daten an eine Auswerteeinheit weiterzuleiten. Hierdurch können Empfangseinheiten vorteilhaft über ein digitales Bussystem mit einer Auswerteeinheit, die sich an einer geeigneten Stelle im Fahrzeug befindet, verbunden werden. Digitale Daten sind dabei sicher übertragbar, wobei insbesondere ein in einem Fahrzeug bereits vorhandenes Bussystem ausgenützt werden kann. Hierdurch wird insbesondere der Anschluss einer Vielzahl von Empfangseinheiten an eine Auswerteeinheit vereinfacht.

Weiterhin ist vorteilhaft, über einen Frequenzgenerator die PLL anzusteuern, weil hierdurch der Einschwingvorgang der PLL verkürzt wird, da im allgemeinen nur eine Phasenverschiebung zwischen dem empfangenen Signal und dem Schwingungstakt der PLL gegeben ist. Besonders vorteilhaft ist dabei, den Frequenzgenerator auch zur Erzeugung des abzustrahlenden Signals zu verwenden, so dass eine Sende- und Empfangseinheit nur einen Frequenzgenerator benötigt.

Weiterhin ist vorteilhaft, das Signal gleichzurichten und die Maxima des gleichgerichteten Signals zu bestimmen. Zwar muß mit der doppelten Frequenz abgetastet werden, jedoch wird dadurch die Auflösung weiter verbessert, so dass Maxima genauer ermittelbar sind.

### Zeichnung

Ausführungsbeispiele der Erfindung sind in der Zeichnung dargestellt und in der nachfolgenden Beschreibung näher erläutert. Es zeigen Figur 1 ein Kraftfahrzeug mit einer Auswerteeinheit und Sende- und Empfangseinheiten, Figur 2 eine Schaltung einer Sende- und Empfangseinheit zur Durchführung des erfindungsgemäßen Verfahrens, Figur 3 ein erstes Ausführungsbeispiel für eine Abtastung eines empfangenen Signals, Figur 4 ein zweites Ausführungsbeispiel für eine Abtastung eines gleichgerichteten, empfangenen Signals und Figur 5 ein weiteres Ausführungsbeispiel für eine Abtastung eines gleichgerichteten, empfangenen Signals.

### Beschreibung des Ausführungsbeispiels

Die vorliegende Erfindung kann für verschiedene Echoverfahren zur Bestimmung einer Entfernung verwendet werden. Sie ist insbesondere dann vorteilhaft, wenn ein Signalpuls, der aus einer Vielzahl von Wellenpaketen unterschiedlicher Amplitude eines Signals besteht, empfangen wird und ein möglichst genauer Zeitpunkt des Signalmaximums des Wellenpakets bestimmt werden soll. Insbesondere wird die vorliegende Erfindung zur Bestimmung eines Abstands mittels eines Ultraschallechomessverfahrens verwendet. Jedoch ist das vorliegende Verfahren auch für optische Meßverfahren unter Verwendung elektromagnetischer Wellen in einem sichtbaren oder einem nicht sichtbaren Wellenbereich möglich. Die vorliegende Erfindung wird hier am Beispiel eines Verfahrens zur Entfernungsmessung mittels eines Ultraschallechomessverfahrens anhand einer in einem Kraftfahrzeug angeordneten Sende- und Empfangseinheit erläutert.

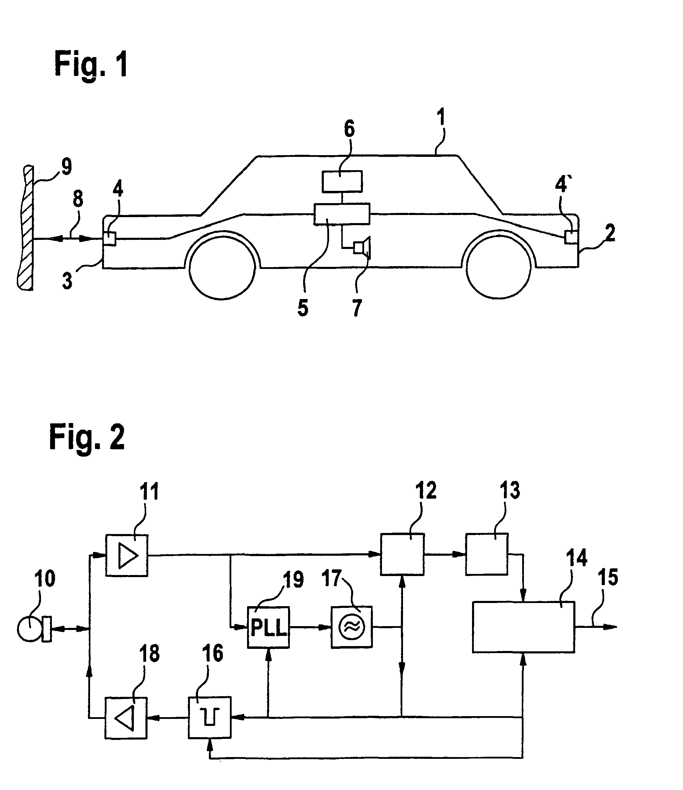

In der Figur 1 ist ein Kraftfahrzeug 1 dargestellt, an dessen Vorderseite 2 und an dessen Rückseite 3 Ultraschall-Sende- und Empfangseinheiten 4, 4' angeordnet sind. Die Ultraschall-Sende- und Empfangseinheiten 4, 4' sind dabei so ausgeführt, dass sie in einem ersten Zustand Ultraschallsignale emittieren und in einem zweiten Zustand Ultraschallsignale empfangen können. Eine Ansteuerung der Ultraschall Sende- und Empfangseinheiten 4, 4' erfolgt über eine zentrale Auswerteeinheit 5, die an einer geeigneten Position im Fahrzeug angeordnet ist. Die Auswerteeinheit 5 ist dabei vorzugsweise so ausgeführt, dass sie Daten einer Vielzahl von Ultraschall Sende- und Empfangseinheiten auswerten kann. Sende- und Empfangseinheiten können auch an den Seiten des Fahrzeugs angeordnet sein. Ferner können weitere Abstandsmessvorrichtungen, so z.B. Radarmessvorrichtungen in dem Fahrzeug angeordnet und ebenfalls mit der Auswerteeinheit 5 verbunden sein. Solche weiteren Abstandssensoren sind in der Figur 1 jedoch nicht dargestellt. Die Auswerteeinheit 5 ist mit einer Anzeige 6 und mit einem Lautsprecher 7 verbunden.

In der Figur 1 wird ein ausgesendetes Ultraschallsignal 8, das von der Sende- und Empfangseinheit 4 auf der Rückseite des Fahrzeugs abgestrahlt wird, von einem Hindernis 9 reflektiert und zu der Sende- und Empfangseinheit 4 zurück reflektiert. Ein Datensignal über das empfangene und über das ausgesendete Signal, insbesondere eine Zeitverschiebung zwischen dem gesendeten und dem empfangenen Signal, wird an die Auswerteeinheit 5 weitergeleitet, die aus der Signallaufzeit eine Entfernung des Kraftfahrzeugs 1 von dem Hindernis 9 berechnet. Die Entfernung wird in der Anzeige 6 angezeigt. Wird eine vorgegebene Entfernung unterschritten, so wird in der Anzeige 6 und vorzugsweise über den Lautsprecher 7 eine optische und/oder akustische Warnung an einen Fahrzeugführer des Kraftfahrzeugs ausgegeben.

In der Figur 2 ist die Sende- und Empfangseinheit 4 als ein elektronischer Schaltkreis im Detail dargestellt. Die Sende- und Empfangseinheit 4 ist dabei vorzugsweise in einem geeigneten Gehäuse an der Rückseite 3 des Kraftfahrzeugs 1 z.B. in der Höhe eines Stoßfängers des Fahrzeugs angeordnet und über elektrische Verbindungen mit der Auswerteeinheit 5 verbunden. Die Sende- und Empfangseinheit 4 umfasst einen Schallwandler 10, der in dem ersten Zustand der Sende- und Empfangseinheit 4 durch das Anlegen einer elektrischen Spannung zum Aussenden von Ultraschallsignalen angeregt wird. In dem zweiten Zustand wird der Schallwandler 10 durch auftreffende Ultraschallwellen zu einer Schwingung angeregt, die von dem Schallwandler in ein elektrisches Spannungssignal umgewandelt wird. Das empfangene Spannungssignal wird zu einer ersten Verstärkereinheit 11 weitergeleitet, die das aus dem Ultraschallsignal gewonnene Spannungssignal verstärkt. Der Ausgang der ersten Verstärkereinheit 11 wird an den Eingang einer Abtaststufe 12 angelegt. Die Abtaststufe 12 tastet das an den Eingang angelegte Spannungssignal ab, wenn sie hierzu über ein Triggersignal angeregt wird. Das abgetastete Signal wird bis zur nächsten Abtastung an einen Ausgang der Abtaststufe 12 gelegt, die mit einem Analog/Digital-Wandler 13 verbunden ist. Der Analog/Digital-Wandler 13 wandelt das von der Abtaststufe 12 empfangene Signal in ein digitales Signal um, das an eine Steuereinheit 14 weitergegeben wird. Die Abtaststufe 12 ist so beschaffen, dass sie die maximal anliegende Spannung bis zu dem Eintreffen eines nächsten Triggersignals registriert und nach Eintreffen eines Triggersignals an den Analog/Digital-Wandler 13 ausgibt. Die Steuereinheit 14 ist vorzugsweise als ein Halbleiterbaustein, z.B. als ein anpassbarer integrierter Schaltkreis (ASIC) oder als ein Mikroprozessor ausgeführt. Die Steuereinheit 14 überträgt das digitalisierte Signal über eine Datenleitung 15 an die Auswerteeinheit 5, in der die Entfernung aus der Singallaufzeit bestimmt wird. Ferner gibt die Steuereinheit 14 auch die Aussendung eines Ultraschallechopulses durch den Schallwandler 10 vor, so dass in der Steuereinheit 14 sowohl der Aussendezeitpunkt als auch der Empfangszeitpunkt des Signals zur Verfügung stehen.

Zum Aussenden eines Signals steuert die Steuereinheit 14 eine Pulserzeugungseinheit 16 an, die für eine kurze Zeit einen Signalpuls eines von einem Frequenzgenerator 17 erzeugten Ultraschallsignals an eine zweite Verstärkereinheit 18 ausgibt. Der Ausgang der zweiten Verstärkereinheit 18 ist mit dem Schallwandler 10 verbunden, der dann das Ultraschallsignal ausstrahlt. So lange eine Ausgabe eines Ultraschallsignals erfolgt, wird in einem ersten Ausführungsbeispiel ein Signal auf die erste Verstärkereinheit 11 gegeben. In einem weiteren Ausführungsbeispiel kann über den Anschluss der ersten Verstärkereinheit 11 das ausgesendete Signal erfasst werden, so dass dieses vor dem reflektierten, empfangenen Signal für eine Bestimmung der Laufzeit mit zur Verfügung steht. Die Triggerung der Abtaststufe 12 erfolgt vorzugsweise ebenfalls über ein von dem Frequenzgenerator 17 abgegebenen Signal mit der Frequenz des Ultraschallsignals oder mit einem ganzzahligen Vielfachen dieser Frequenz. In diesem Fall wird der Frequenzgenerator 17 über eine PLL-Stufe 19 angesteuert (Phase locked loop). Die PLL-Stufe 19 ist mit dem Ausgang der ersten Verstärkereinheit 11 gekoppelt, so dass ein Triggersignal von der PLL-Stufe 19 bei einem Maximum des von der ersten Verstärkereinheit 11 ausgegebenen Signals an den Frequenzgenerator 17 ausgegeben wird. Die PLL-Stufe 19 selber ist an einen Ausgang des Frequenzgenerators 17 angeschlossen, so dass eine zusätzliche Rückkopplung über die Ausgangsfrequenz des Frequenzgenerators 17 erfolgt und das von der ersten Verstärkereinheit 11 empfangene Signal nur zu einem Feinabgleich dient. Die PLL-Stufe 19 bewirkt eine Korrektur der Phasenverschiebung zwischen dem Empfangssignal und der Abtastrate, wodurch nach einem erfolgten Einschwingvorgang eines Regelkreises der PLL-Stufe 19 eine Abtastung des Signals genau an den Maxima erfolgen kann. Durch den Feinabgleich können auch geringfügige Frequenzverschiebungen in Folge des Dopplereffekts bei einer Bewegung des Hindernisses 9 und/oder des Kraftfahrzeugs 1 ausgeglichen werden.

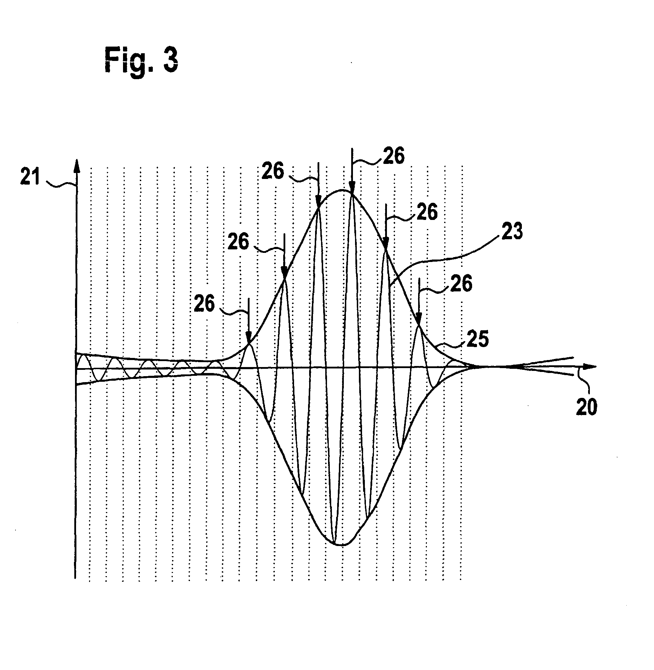

In der Figur 3 ist ein Ausführungsbeispiel für eine Abtastung eines Ultraschallsignals dargestellt. Über einer als eine Zeitachse 20 fungierenden x-Achse ist auf einer y-Achse 21 eine Amplitude des aus dem empfangenen Ultraschallsignal gewonnenen elektrischen Signals 23 aufgetragen, das zu dem empfangenen Ultraschallsignal proportional ist. Die Zeitachse 20 ist dabei durch senkrechte, gepunktete Linien 24 jeweils entsprechend halber Signalperioden zur besseren Übersichtlichkeit unterteilt. Das Signal 23 ist beidseitig von einer Hüllkurve 25 umschlossen. Lokale Maxima bei einer positiven Amplitude des Ultraschallsignals sind durch Pfeile 26 bezeichnet. Der Pfeil 26' stellt dabei das absolute Maximum dar, wobei der Zeitpunkt im Rahmen der Auflösbarkeit abhängig von der gegebenen Signalfrequenz den Zeitpunkt des maximalen Signals darstellt. Der Zeitpunkt des Eintreffens des maximalen Signals wird als Laufzeit des Signals für die weitere Entfernungsmessung ausgewertet.

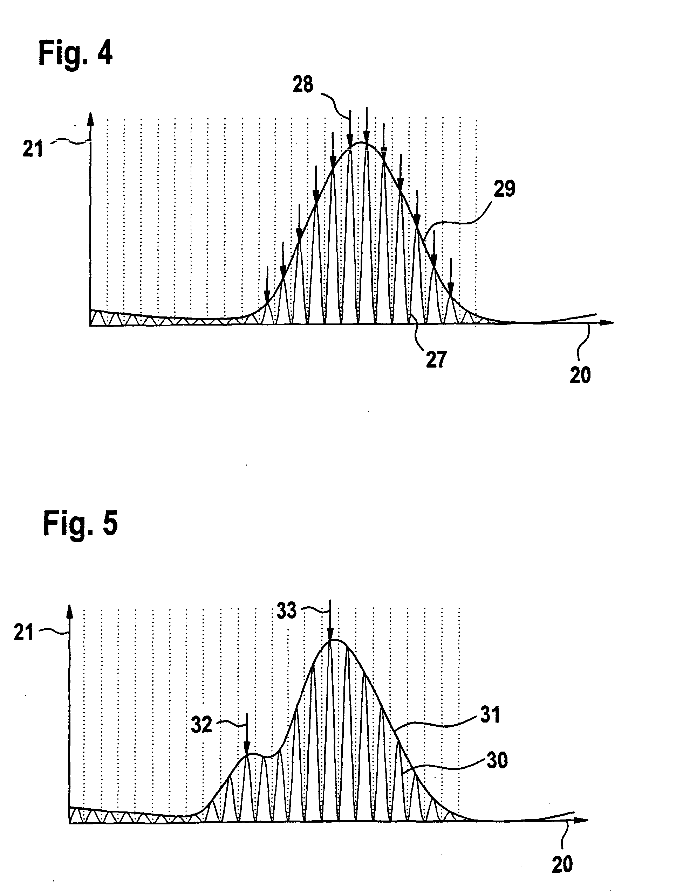

In der Figur 4 ist ein weiteres Ausführungsbeispiel für einen Signalempfang dargestellt. Über der Zeitachse 20 ist entlang der y-Achse 21 die Signalamplitude des gleichgerichteten Signals aufgetragen. Um ein gleichgerichtetes Signal zu erhalten, ist in die erste Verstärkereinheit 11 ein Gleichrichter zu integrieren bzw. der ersten Verstärkereinheit 11 vor- oder nachzuschalten. Im Vergleich zu der Abtastung gemäß der Figur 3 ist zur genaueren Bestimmung eines Maximums in diesem Fall die Abtastrate zu verdoppeln, so dass bezüglich des Eingangs der Abtaststufe 12 die von dem Frequenzgenerator 17 abgegebene Frequenz verdoppelt werden muß. Das gleichgerichtete Signal 27 wird nun doppelt so oft abgetastet, was durch Pfeile 28 symbolisiert ist, von denen aus Gründen der Übersichtlichkeit der Zeichnung nur der Pfeil bei einer maximalen Amplitude mit einem Bezugszeichen versehen ist. Sowohl aus der Figur 3 als auch aus der Figur 4 wird deutlich, dass auf die detaillierte Bestimmung einer Hüllkurve 25 bzw. 29 gemäß den Figuren 3 bzw. 4 verzichtet werden kann, ohne dass die Genauigkeit der Laufzeit- und damit der Entfernungsbestimmung abnimmt.

In der Figur 5 ist ein weiterer Empfang eines gleichgerichteten Signals 30 dargestellt, dessen Amplitude an der y-Achse 21 über der Zeitachse 20 aufgetragen ist. Wie es durch die Hüllkurve 31 für einen Betrachter deutlich wird, existiert ein erstes Maximum 32 und ein zweites Maximum 33. Die Maxima 32 und 33 können sauber getrennt werden. Das erste Maximum 32 deutet darauf hin, dass möglicherweise vor dem durch das zweite Maximum 33 bezeichneten Hindernis ein weiteres, hervorstehendes Hindernis liegt, z. B. eine Kante oder ähnliches, so dass ein Fahrer bereits früher gewarnt werden muss. Bei einer zu starken Verbreiterung einer Hüllkurve 31 könnte das erste Maximum 32 für eine Auswertung untergehen, so dass eine Warnung vor diesem Hindernis unterbleiben würde. Mit dem erfindungsgemäßen Verfahren ist jedoch eine Detektion möglich.

Ein Datentransport von der Steuereinheit 14 zu der Auswerteeinheit 5 verläuft vorzugsweise über einen digitalen Datenbus. Dieser Datenbus kann z.B. ein Eindrahtbus, ein Zweidrahtbus oder ein optischer Datenbus sein.

Außer dem direkten Empfang von Echos mit demselben Ultraschallwandler können auch Kreuzechos empfangen werden, d.h. reflektierte Signale, die von einem ersten Ultraschallwandler ausgesendet und von einem zweiten Ultraschallwandler aufgefangen werden. Diese können auf gleiche Weise wie die anhand der Figuren 3 bis 5 beschriebenen Signale verarbeitet werden. Zeitpunkte für die Signalausstrahlung und den Signalempfang werden an die Auswerteeinheit 5 übertragen. Gleiches gilt für den Fall, dass Sendeeinheit und Empfangseinheit nicht identisch, sondern nebeneinander angeordnet sind.

Ein typischer Parameter für den Einsatz des erfindungsgemäßen Verfahrens in der Praxis ist eine Periodendauer der Schallfrequenz von 20 µs entsprechend einer Frequenz von 50 kHz. Der Abstand eines Objektes ergibt sich aus der folgenden Beziehung: Laufzeit multipliziert mit Schallgeschwindigkeit dividiert durch zwei. Damit ergibt sich bei einer Frequenz von 50 kHz eine Abstandsauflösung von ca. 3,4 mm. Als zeitliche Länge eines Sendepulses empfehlen sich mindestens 10 Perioden für einen Puls, vorzugsweise jedoch mindestens 15 Perioden, so dass ein Sendepuls ungefähr 300 µs lang ist. Hierdurch ist eine Trennfähigkeit zwischen zwei beabstandeten Hindernissen von ca. 50 mm gegeben. Durch eine Steigerung der Abtastfrequenz bzw. durch eine Steigerung der Sendefrequenz kann die Genauigkeit und die Trennschärfe dabei erhöht werden.

## Patentansprüche

1. Verfahren zur Entfernungsmessung, wobei ein Signal von einer Sendereinheit (10) abgestrahlt wird, wobei das Signal von einem Hindernis (9) reflektiert wird, wobei das Signal von einer Empfängereinheit (10) aufgenommen wird, wobei die Laufzeit des Signals bestimmt wird und wobei aus der Laufzeit des Signals eine Entfernung des Hindernisses (9) bestimmt wird, **dadurch gekennzeichnet, dass** das empfangene Signal (12, 27, 30) mit seiner Frequenz oder einem Vielfachen seiner Frequenz abgetastet wird und dass eine Abtastung des empfangenen Signals mittels einer PLL-Stufe (19) synchronisiert wird.

2. Verfahren nach Anspruch 1, **dadurch gekennzeichnet, dass** die Sendefrequenz von einem Frequenzgenerator (17) auf einen Eingang der PLL-Stufe (19) gegeben wird.

3. Verfahren nach Anspruch 2, **dadurch gekennzeichnet, dass** die Sendereinheit (10) über den Frequenzgenerator (17) angesteuert wird.

4. Verfahren nach einem der vorhergehenden Ansprüche, **dadurch gekennzeichnet, dass** Maxima der Amplitude des empfangenen Signals erfasst und ausgewertet werden.

5. Verfahren nach einem der vorhergehenden Ansprüche, **dadurch gekennzeichnet, dass** Daten des empfangenen Signals digitalisiert werden und dass die digitalisierten Daten an eine Auswerteeinheit (14) weitergeleitet werden.

6. Verfahren nach einem der vorhergehenden Ansprüche, **dadurch gekennzeichnet, dass** Ultraschallsignale ausgestrahlt und empfangen werden.

7. Verfahren nach einem der vorhergehenden Ansprüche, **dadurch gekennzeichnet, dass** das empfangene Signal gleichgerichtet und mit ungefähr der doppelten Senderfrequenz abgetastet wird.

8. Vorrichtung zur Entfernungsmessung an einem Kraftfahrzeug mit einer Vielzahl von Sendereinheiten zum Abstrahlen eines Signals von einer der Sendereinheiten (10), wobei das Signal von einem Hindernis (9) reflektiert wird, und mit einer Vielzahl von Empfangseinheiten (10) zum Aufnehmen des Signals, wobei die Laufzeit des Signals bestimmt wird und wobei aus der Laufzeit des Signals eine Entfernung des Hindernisses (9) bestimmt wird, **dadurch gekennzeichnet, dass** das empfangene Signal mit seiner Frequenz oder einem Vielfachen seiner Frequenz abgetastet wird, wobei eine PLL-Stufe (19) zum Synchronisieren einer Abtastung des empfangenen Signals (23, 27, 30) vorgesehen ist.

## Claims

1. Distance-measuring method, a signal being emitted by a transmitter unit (10), the signal being reflected by an obstacle (9), the signal being received by a receiver unit (10), the propagation time of the signal being determined and the propagation time of the signal being used to determine a distance of the obstacle (9), **characterized in that** the received signal (12, 27, 30) is sampled at its frequency or at a multiple of its frequency, and **in that** a PLL stage (19) is used to synchronize sampling of the received signal.

2. Method according to Claim 1, **characterized in that** a frequency generator (17) passes the transmission frequency to an input of the PLL stage (19).

3. Method according to Claim 2, **characterized in that** the transmitter unit (10) is driven using the frequency generator (17).

4. Method according to one of the preceding claims, **characterized in that** maxima of the amplitude of the received signal are detected and evaluated.

5. Method according to one of the preceding claims, **characterized in that** data of the received signal are digitized, and **in that** the digitized data are forwarded to an evaluation unit (14).

6. Method according to one of the preceding claims, **characterized in that** ultrasonic signals are emitted and received.

7. Method according to one of the preceding claims, **characterized in that** the received signal is rectified and is sampled at approximately twice the transmitter frequency.

8. Distance-measuring apparatus on a motor vehicle, said apparatus having a multiplicity of transmitter units for emitting a signal from one of the transmitter units (10), the signal being reflected by an obstacle (9), and having a multiplicity of receiving units (10) for receiving the signal, the propagation time of the signal being determined and the propagation time of the signal being used to determine a distance of the obstacle (9), **characterized in that** the received signal is sampled at its frequency or at a multiple of its frequency, a PLL stage (19) being provided in order to synchronize sampling of the received signal (23, 27, 30).

## Revendications

1. Procédé de mesure de la distance, selon lequel
un signal est émis par une unité émettrice (10),
le signal est réfléchi par un obstacle (9),
le signal est capté par une unité réceptrice (10),
le temps de propagation du signal est déterminé, et
l'éloignement de l'obstacle (9) est déterminé à partir du temps de propagation du signal,
**caractérisé en ce que**
le signal reçu (12, 27, 30) est échantillonné à sa fréquence ou à un multiple de sa fréquence et un échantillonnage du signal reçu est synchronisé au moyen d'un étage PLL (19).

2. Procédé selon la revendication 1,
**caractérisé en ce que**
la fréquence d'émission d'un générateur de fréquence (17) est fournie à une entrée de l'étape PLL (19).

3. Procédé selon la revendication 2,
**caractérisé en ce que**
l'unité émettrice (10) est commandée par le générateur de fréquence (17).

4. Procédé selon l'une des revendications précédentes,
**caractérisé par**
la captation et l'évaluation des maxima de l'amplitude du signal reçu.

5. Procédé selon l'une des revendications précédentes,
**caractérisé en ce que**
des données du signal reçu sont numérisées et les données numérisées sont transmises à une unité d'évaluation (14).

6. Procédé selon l'une des revendications précédentes, **caractérisé par**
l'émission et la réception de signaux ultrasons.

7. Procédé selon l'une des revendications précédentes,
**caractérisé en ce que**
le signal reçu est redressé et échantillonné à environ le double de la fréquence de l'émetteur.

8. Dispositif de mesure de la distance sur un véhicule comportant :
- plusieurs unités émettrices, pour émettre un signal qui est issu d'une des unités émettrices (10) et réfléchi par un obstacle (9), et
- plusieurs unités réceptrices (10) pour capter le signal, le temps de propagation du signal étant déterminé et l'éloignement de l'obstacle (9) étant déterminé à partir du temps de propagation du signal,
**caractérisé en ce que**
le signal reçu est échantillonné à sa fréquence ou à un multiple de sa fréquence, un étage PLL (19) étant prévu pour synchroniser un échantillonnage du signal reçu (23, 27, 30).
